# EUROPÄISCHE PATENTANMELDUNG

(11) **EP 4 331 931 A1**
(43) Veröffentlichungstag der Anmeldung: **06.03.2024**
(21) Anmeldenummer: 23184650.2
(22) Anmeldetag: 11.07.2023
(51) Int. Cl.: B60T 13/74, B60T 17/22

(54) **VERFAHREN ZUM BETREIBEN EINES BREMSSYSTEMS, COMPUTERPROGRAMMPRODUKT SOWIE FAHRZEUG**

(30) Priorität: 19.08.2022 DE 102022208642
(71) Anmelder: VOLKSWAGEN AG, 38440 Wolfsburg (DE)
(72) Erfinder: Alagöz, Halit, 30519 Hannover (DE); Gähle, Florian, 30459 Hannover (DE); Protze, Christopher, 38442 Wolfsburg (DE); Hatje, Philipp, 38554 Weyhausen (DE)

(57) **Zusammenfassung**

Die Erfindung betrifft ein Verfahren (100) um Betreiben eines Bremssystems (10) eines Fahrzeuges (1), welches zumindest einen Stellmittel (11) aufweist, der in einen Haltezustand (I) zum Erzeugen einer Haltekraft (210) an einem Fahrzeugrad (2) des Fahrzeuges (1) und in einen Öffnungszustand (II), in welchem die Haltekraft (210) gelöst ist, bringbar ist. Ferner betrifft die Erfindung ein Computerprogrammprodukt, sowie ein Fahrzeug (1).

## Beschreibung

Die Erfindung betrifft ein Verfahren zum Betreiben eines Bremssystems eines Fahrzeuges, welches zumindest ein Stellmittel aufweist, ein Computerprogrammprodukt, sowie ein Fahrzeug.

Es ist bekannt, dass Fahrzeuge inzwischen über automatisierte Einparkassistenten verfügen. Beim hochautomatisierten Parken übernimmt das Fahrzeugsystem i. d. R. das Ein- bzw. Ausparken für vorab ausgewählte Parklücken. Hierbei kann der Fahrer sich im oder außerhalb des Fahrzeugs befinden, und das Geschehen beobachten. Dabei ist es dem System auch möglich in enge Parklücken, in denen die Fahrertüren kaum zu öffnen sind, ein- und auszuparken. Um das Fahrzeug z. B. beim Parken an einer Steigung gegen Verrollen zu sichern wird dabei häufig eine elektromechanische Feststellbremse eingesetzt.

Allerdings hat der Fahrer außerhalb des Fahrzeuges nur begrenzte Einflussmöglichkeiten im Falle eines Ausfalls der Feststellbremse. Während der Fahrer beim manuellen Einparken, bei welchem der Fahrer sich im Fahrzeug befindet und das Fahrzeug steuert, im Fehlerfall beispielsweise noch die hydraulische Bremsanlage betätigen kann oder den Einparkvorgang abbrechen kann, ist der manuelle Eingriff beim hochautomatisierten Parken nicht möglich. Auch bei einem Brake-by-Wire-System können die Einflussmöglichkeiten des Fahrers bei einem Systemausfall begrenzt sein.

Es ist beispielsweise aus dem Dokument DE 10 2010 040 573 A1 bekannt, eine Störung einer Feststellbremse durch eine Überwachung einer motorischen Kenngröße eines elektrischen Bremsmotors zu erkennen. Dazu wird die Kenngröße während einer Betätigung einer Feststellbremse überwacht. Dementsprechend wird ein vollständiger Bremshub ausgeführt, bei welchem die Feststellbremse zuvor gelöst ist. Es ist wünschenswert, die Zeit zum Erkennen der Störung zu reduzieren und/oder eine Störung im gesicherten Stillstand des Fahrzeuges zu erkennen.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Störung eines Bremssystems in schneller und zuverlässiger Art und Weise zu erkennen, während das Fahrzeug zumindest teilweise gegen ein Verrollen gesichert ist.

Die voranstehende Aufgabe wird gelöst durch ein Verfahren mit den Merkmalen des Anspruchs 1, einen Computerprogrammprodukt mit den Merkmalen des Anspruchs 9, sowie ein Fahrzeug mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder dem erfindungsgemäßen Fahrzeug und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist ein Verfahren zum Betreiben eines Bremssystems eines Fahrzeuges vorgesehen. Das Bremssystem weist zumindest ein Stellmittel auf, das in einen Haltezustand zum, vorzugsweise elektromechanischen, Erzeugen einer Haltekraft an einem Fahrzeugrad des Fahrzeuges und in einen Öffnungszustand, in welchem die Haltekraft gelöst ist, d .h. insbesondere reduziert oder aufgehoben ist, bringbar ist. Das Verfahren umfasst, insbesondere in Form von Verfahrensschritten:
- Ansteuern des Stellmittels zum Durchführen eines Nachstellvorgangs zur Erhöhung der Haltekraft, insbesondere durch das Stellmittel, im Haltezustand des Stellmittels, insbesondere durch eine Steuereinheit des Fahrzeuges und/oder des Bremssystems,
- Erfassen eines Betriebsparameters des Stellmittels bei dem Nachstellvorgang, insbesondere durch die Steuereinheit,
- Auswerten des Betriebsparameters zum Erkennen einer Störung des Bremssystems in Abhängigkeit von dem Nachstellvorgang, insbesondere durch die Steuereinheit,
- Ausführen einer Reaktionsmaßnahme in Abhängigkeit von der Auswertung des Betriebsparameters, insbesondere durch die Steuereinheit.

Bei dem Fahrzeug kann es sich vorzugsweise um ein Kraftfahrzeug, z. B. in Form eines Elektrofahrzeuges, und/oder um ein Luftfahrzeug mit einem Fahrwerk handeln. Bei dem Bremssystem kann es sich beispielsweise um ein Parkbremssystem und/oder ein Betriebsbremssystem, vorzugsweise in Form eines Brake-by-Wire-Systems, des Fahrzeuges handeln.

Die Haltekraft kann durch das Stellmittel direkt oder indirekt am Fahrzeugrad erzeugt werden. Beispielsweise kann die Haltekraft an einer dem Fahrzeugrad zugeordneten Bremsschreibe wirken, um die Haltekraft zu erzeugen. Das Stellmittel kann einen elektromechanischen und/oder einen hydraulischen Aktor umfassen. Insbesondere kann das Fahrzeug im Haltezustand zumindest teilweise oder ausschließlich durch die Haltekraft gehalten werden. Im Haltezustand des Stellmittels kann sich das Fahrzeug beispielsweise im Parkzustand oder im Stillstand befinden. Durch das Bremssystem kann das Fahrzeug dabei in einer Position, insbesondere in Form einer Abstellposition und/oder einer Parkposition, gehalten werden. Ferner kann das Stellmittel zum hydraulischen und/oder elektromechanischen Erzeugen der Haltekraft ausgebildet sein. Beispielsweise kann das Stellmittel zumindest ein Teil einer hydraulischen und/oder elektromechanischen Radbremse des Fahrzeuges sein. Das Stellmittel kann vom Öffnungszustand in den Haltezustand überführt werden, während sich das Fahrzeug im Stillstand befindet, um das Fahrzeug, z. B. gegen Verrollen, abzusichern. Es ist jedoch ebenso denkbar, dass das Stellmittel, insbesondere bei geringer Geschwindigkeit, während einer Fahrt des Fahrzeuges vom Öffnungszustand in den Haltezustand überführt wird, um das Fahrzeug abzubremsen. Insbesondere kann die Haltekraft auch als Bremskraft bezeichnet werden.

Der Nachstellvorgang kann insbesondere auch als Nachspannvorgang bezeichnet werden. Beim Ansteuern des Stellmittels zum Durchführen des Nachstellvorgangs können z. B. Steuerungssignale von der Steuereinheit an das Stellmittel übertragen werden, um das Stellmittel zu bewegen und die Haltekraft zu erhöhen. Vorzugsweise kann das Stellmittel über eine vordefinierte Zeitspanne, vorzugsweise über 100 bis 200 ms, zum Durchführen des Nachstellvorgangs angesteuert werden. Nach Ablauf der Zeitspanne kann die Ansteuerung und/oder der Nachstellvorgang beendet werden, insbesondere unabhängig davon, ob die Haltekraft tatsächlich erhöht wurde. Beim Nachstellvorgang kann die Haltekraft z. B. dadurch erhöht werden, dass das Stellmittel auf das Fahrzeugrad und/oder die Bremsscheibe zubewegt wird und/oder in Richtung des Fahrzeugrades und/oder der Bremsschreibe eine zusätzliche Belastung aufbringt.

Der Betriebsparameter kann zum Erfassen des Betriebsparameters vorzugsweise im Bremssystem, insbesondere am Stellmittel, gemessen werden, während die Haltekraft beim Nachstellvorgang erhöht wird. Insbesondere kann ein Verlauf des Betriebsparameters zum Erfassen des Betriebsparameters über eine Zeit erfasst und/oder aufgezeichnet werden. Der Betriebsparameter kann eine physikalische Größe umfassen, die für den Nachstellvorgang und/oder das Stellmittel charakteristisch ist. Es ist denkbar, dass der Betriebsparameter eine Last am Stellmittel, insbesondere in Form der Haltekraft, repräsentiert und/oder dass es sich bei dem Betriebsparameter um eine Last am Stellmittel, insbesondere in Form der Haltekraft, handelt.

Bei der Störung kann es sich z. B. um einen elektrischen und/oder mechanischen Fehler und/oder um einen Softwarefehler des Bremssystems handeln. Beispielsweise kann die Störung eine Beschädigung einer elektrischen und/oder hydraulischen Versorgungsleitung des Stellmittels und/oder einer Kommunikationsleitung umfassen, wodurch der Betriebsparameter beim Nachstellvorgang beeinflusst wird. Beim Auswerten des Betriebsparameters kann vorzugsweise überprüft werden, ob ein vordefinierter Schwellwert des Betriebsparameters während des Nachstellvorgangs erreicht wird.

Die Reaktionsmaßnahme kann eine Ausgabe eines Warnhinweises an einen Benutzer, ein Initiieren eines Notbetriebes des Fahrzeuges und/oder eine Sicherungsmaßnahme des Fahrzeuges umfassen. Der Warnhinweis kann dem Benutzer durch eine Anzeige des Fahrzeuges und/oder eines mobilen Endgerätes angezeigt werden. Im Notbetrieb des Fahrzeuges kann vorgesehen sein, dass das Fahrzeug abgestellt und/oder gewartet wird. Zum Ausführen der Sicherungsmaßnahme kann ein zuvor angeforderter Vorgang zum Überführen des Stellmittels in den Öffnungszustand automatisch abgebrochen und/oder eine Funktion des Fahrzeuges blockiert werden. Beispielsweise kann durch die Sicherungsmaßnahme ein Start eines zumindest teilweise oder vollständig automatisierten Parkvorgangs des Fahrzeuges verhindert werden.

Somit kann durch das Erkennen der Störung eine Verfügbarkeit des Bremssystems erhöht werden. Ferner ist im Rahmen der Erfindung erkannt worden, dass das Erfassen und Auswerten des Betriebsparameters beim Nachstellvorgang eine Diagnose des Bremssystems, insbesondere des Stellmittels, ermöglicht, während sich das Stellmittel im Haltezustand befindet, in welchem das Fahrzeug insbesondere zumindest teilweise durch die Haltekraft gesichert ist. Folglich kann die Reaktionsmaßnahme z. B. noch im Stillstand des Fahrzeuges erfolgen. Eine manuelle Rückfallebene durch einen Fahrereingriff kann folglich auch beim Vorliegen einer Störung nicht erforderlich sein, um ein unkontrolliertes Verrollen des Fahrzeuges zu verhindern. Dadurch, dass sich das Stellmittel bereits im Haltezustand befindet, ist es insbesondere nicht notwendig, dass ein vollständiger Bremshub durch das Stellmittel ausgeführt wird. Somit kann der Nachstellvorgang in einer kurzen Zeitspanne realisiert werden. Beispielsweise kann der Nachstellvorgang in einer Zeitspanne, die kleiner oder gleich 300 ms ist, durchführbar sein. Es kann vorgesehen sein, dass das Durchführen des Nachstellvorgangs und das Erfassen und Auswerten des Betriebsparameters vor jeder Fahrt und/oder in jedem laufenden Zündungsfall, d. h. insbesondere in jedem Zündlauf, des Fahrzeuges automatisch ausgeführt wird.

Im Rahmen der Erfindung ist es weiterhin denkbar, dass es sich bei dem Stellmittel um einen Stellantrieb zum elektromechanischen Erzeugen der Haltekraft handelt. Ferner kann es sich bei dem Betriebsparameter um einen elektrischen Stromparameter des Stellmittels handeln. Beispielsweise kann der Stellantrieb einen Elektromotor und/oder einen Spindeltrieb umfassen. Insbesondere kann der Stellantrieb Teil einer elektromechanischen und/oder hydraulischen Radbremse, vorzugsweise in Form einer Feststell- und/oder Parkbremse, des Bremssystems sein. Vorteilhafterweise kann der Stellantrieb in einen Bremssattel der Radbremse für das Fahrzeugrad integriert sein und/oder zum Erzeugen der Haltekraft auf eine Komponente der Radbremse, z. B. einen Bremsbelag und/oder eine Bremsscheibe, wirken. Der elektrische Stromparameter, insbesondere ein Verlauf des Stromparameters, kann charakteristisch für die Störung und/oder einen Normalzustand des Stellantriebs sein. Beispielsweise kann der Betriebsparameter eine Spannung und/oder eine Stromstärke eines Stroms, insbesondere eines Antriebsstroms, des Stellmittels, umfassen. Ferner kann beim Erfassen des Betriebsparameters ein Abschaltstrom des Stellmittels, insbesondere anhand des Verlauf des Betriebsparameters, überwacht werden. Dabei kann der Abschaltstrom beim Nachstellvorgang größer sein, als ein, insbesondere regulärer, Abschaltstrom beim Überführen des Stellmittels vom Öffnungszustand in den Haltezustand. Beim elektromechanischen Erzeugen der Haltekraft kann der Haltezustand in einfacher Art und Weise auch bei einem plötzlichen Ausfall einer Versorgungs- und/oder Kommunikationsleitung aufrechterhalten werden. Beispielsweise kann vorgesehen sein, dass sich der Stellantrieb vor dem Durchführen des Nachstellvorgangs in einem deaktivierten und/oder stromlosen Zustand befindet.

Es ist ferner bei einem erfindungsgemäßen Verfahren denkbar, dass beim Auswerten des Betriebsparameters ein Verlauf des Betriebsparameters mit einem Referenzverlauf für den Nachstellvorgang verglichen wird. Der Referenzverlauf kann, insbesondere anhand von Versuchs- und/oder Betriebsdaten, vordefiniert sein. Beispielsweise kann der Referenzverlauf einen Verlauf des Betriebsparameters, z. B. in Form einer Stromkurve, umfassen, der charakteristisch für die Störung und/oder einen Normalzustand des Bremssystems, insbesondere des Stellmittels, ist. Es kann vorgesehen sein, dass die Störung erkannt wird, wenn der Verlauf des Betriebsparameters, insbesondere unter Berücksichtigung einer Toleranz, vom Referenzverlauf abweicht.

Weiterhin ist es bei einem erfindungsgemäßen Verfahren denkbar, dass das Durchführen des Nachstellvorgangs in Abhängigkeit von einer Anforderung zum Überführen des Stellmittels in den Öffnungszustand erfolgt. Die Anforderung kann von einer Benutzerschnittstelle und/oder einem Fahrsystem des Fahrzeuges erhalten werden. Das Durchführen des Nachstellvorgangs zur Diagnose des Bremssystems kann insbesondere automatisch vor dem Überführen des Stellmittels vom Haltezustand in den Öffnungszustand erfolgen. Somit kann sichergestellt werden, dass die Diagnose ausgeführt wird, bevor das Fahrzeug bewegt wird. Dadurch kann beispielsweise eine Störung erkannt werden, die nach einer längeren Abstellzeit des Fahrzeuges auftritt. Beispielsweise kann dadurch verhindert werden, dass ein Wasser- und/oder Frostschaden des Stellantriebs und/oder der Steuereinheit, und/oder ein Marderbiss in einer Versorgungs- und/oder Kommunikationsleitung des Stellantriebs unerkannt bleibt.

Im Rahmen der Erfindung ist es weiterhin denkbar, dass das Überführen des Stellmittels in den Öffnungszustand nach dem Durchführen des Nachstellvorgangs ausgeführt wird, insbesondere wobei der Betriebsparameter zusätzlich beim Überführen des Stellmittels in den Öffnungszustand erfasst und zum Erkennen der Störung ausgewertet wird. Durch die zusätzliche Erfassung und Auswertung des Betriebsparameters beim Öffnungsvorgang kann die Diagnose der Störung über den Verlauf des Betriebsparameters beim Überführen des Stellmittels in den Öffnungszustand ausgeweitet werden. Dadurch kann die Datenbasis beim Erkennen der Störung vergrößert und damit die Zuverlässigkeit beim Erkennen der Störung verbessert werden.

Im Rahmen der Erfindung ist es weiterhin denkbar, dass das Ansteuern des Stellmittels zum Durchführen des Nachstellvorgangs durch eine Steuereinheit des Bremssystems ausgeführt wird, insbesondere wobei, vorzugsweise beim Auswerten des Betriebsparameters, eine Lastprüfung der Steuereinheit ausgeführt wird. Bei der Lastprüfung der Steuereinheit kann die Lastprüfung vorzugsweise für H-Brücken der Steuereinheit durchgeführt werden. Bei der Lastprüfung kann dabei, insbesondere anhand des Betriebsparameters, festgestellt werden, ob die Störung eine Fehlfunktion der Steuereinheit umfasst. Dadurch kann eine Fehlererkennung im Bremssystem verbessert sein.

Weiterhin ist es bei einem erfindungsgemäßen Verfahren denkbar, dass das Bremssystem eine, vorzugsweise hydraulische, Bremseinheit zum Aufbringen einer Bremskraft an dem Fahrzeugrad aufweist, an welcher das Stellmittel zum Ausüben der Haltekraft wirkt, insbesondere wobei die Bremskraft durch die Bremseinheit vor dem Durchführen des Nachstellvorgangs zumindest teilweise am Fahrzeugrad aufgebracht wird während sich das Stellmittel in dem Haltezustand befindet, um das Stellmittel vor dem Nachstellvorgang zu entlasten, d. h. insbesondere die Haltekraft des Stellmittels vor dem Nachstellvorgang zu reduzieren. Die Bremseinheit kann insbesondere eine hydraulische Radbremse des Bremssystems umfassen. Durch die Entlastung des Stellmittels kann verhindert werden, dass durch den Nachstellvorgang, insbesondere bei einer großen Anzahl an Wiederholungen über den Lebenszyklus des Bremssystems, eine mechanische Schädigung auftritt. Insbesondere, wenn der Stellantrieb einen elektromechanisch bewegbares Aktorelement aufweist, kann das Aktorelement beim Aufbringen der Bremskraft, insbesondere in Form einer hydraulischen Last, durch die Bremseinheit in seiner Ausgangsposition verbleiben, während die Haltekraft zumindest teilweise von der Bremseinheit übernommen wird. Somit kann die Entlastung des Stellmittels insbesondere durch eine Überlagerung der Bremskraft und der Haltekraft erfolgen. Dazu kann das Aktorelement z. B. in einem Bremskolben der Bremseinheit angeordnet sein. Vorzugsweise kann der Nachstellvorgang zumindest im Wesentlichen oder genau bis zu einem regulären Wert der Haltekraft erfolgen, der durch den Stellantrieb in einem funktionstüchtigen Normalzustand ohne die Entlastung durch die Bremseinheit im Haltezustand vorliegt.

Im Rahmen der Erfindung ist es weiterhin denkbar, dass das Durchführen des Nachstellvorgangs bei einem automatisierten, insbesondere vollständig automatisierten, Ein- und/oder Ausparkvorgang des Fahrzeuges erfolgt. Bei dem automatisierten Ein- und Ausparkvorgang kann vorgesehen sein, dass ein Benutzer sich außerhalb des Fahrzeuges befindet. Dabei kann der Benutzer den Ein- und/oder Ausparkvorgang überwachen. Beispielsweise kann der Ein- und/oder Ausparkvorgang in Abhängigkeit von einer Bedienhandlung, z. B. der permanenten Betätigung einer Schaltfläche an einem mobilen Endgerät des Benutzers während des Ein- und/oder Ausparkvorgangs, ausgeführt werden. Durch die kurze Zeitspanne des Nachstellvorgangs und die Diagnose zum Erkennen der Störung erhält der Benutzer mit einer geringen oder nahezu ohne Verzögerung eine Reaktion des Fahrzeuges, wenn der Ein- und/oder Ausparkvorgang über das mobile Endgerät gestartet wird. Durch die reduzierte Reaktionszeit des Bremssystems kann somit ein hoher Nutzerkomfort erzielt werden, ohne die Sicherheit des Fahrzeuges zu vernachlässigen.

Gemäß einem weiteren Aspekt der Erfindung ist ein Computerprogrammprodukt vorgesehen. Das Computerprogrammprodukt umfasst Befehle, die bei einer Ausführung durch eine Steuereinheit die Steuereinheit veranlassen, ein erfindungsgemäßes Verfahren auszuführen.

Somit bringt ein erfindungsgemäßer Computerprogrammprodukt die gleichen Vorteile mit sich, wie sie bereits ausführlich mit Bezug auf ein erfindungsgemäßen Verfahren beschrieben worden sind. Bei dem Verfahren kann es sich insbesondere um ein computerimplementiertes Verfahren handeln. Das Computerprogrammprodukt kann als computerlesbarer Anweisungscode implementiert sein. Ferner kann das Computerprogrammprodukt auf einem computerlesbaren Speichermedium wie einer Datendisk, einem Wechsellaufwerk, einem flüchtigen oder nichtflüchtigen Speicher, oder einem eingebauten Speicher/Prozessor abgespeichert sein. Ferner kann das Computerprogrammprodukt in einem Netzwerk wie beispielsweise dem Internet bereitstellbar oder bereitgestellt sein, von dem es bei Bedarf von einem Nutzer heruntergeladen oder online ausgeführt werden kann. Das Computerprogrammprodukt kann sowohl mittels einer Software, als auch mittels einer oder mehrerer spezieller elektronischer Schaltungen, d.h. in Hardware oder in beliebig hybrider Form, d.h. mittels Software-Komponenten und Hardware-Komponenten, realisiert sein. Gemäß einem weiteren Aspekt der Erfindung ist ein Fahrzeug vorgesehen. Das Fahrzeug weist ein erstes Fahrzeugrad und ein Bremssystem auf. Das Bremssystem umfasst ein Stellmittel, das in einen Haltezustand zum, vorzugsweise elektromechanischen, Erzeugen einer Haltekraft an dem Fahrzeugrad und in einen Öffnungszustand, in welchem die Haltekraft gelöst ist, bringbar ist. Weiterhin weist das Fahrzeug eine Steuereinheit zum Ausführen eines erfindungsgemäßen Verfahrens auf.

Somit bringt ein erfindungsgemäßes Fahrzeug die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Die Steuereinheit kann einen Prozessor und/oder einen Mikroprozessor umfassen. Ferner kann die Steuereinheit zumindest teilweise oder vollständig in ein zentrales Steuergerät des Fahrzeuges, vorzugsweise des Bremssystems, integriert sein. Es ist jedoch ebenfalls denkbar, dass die Steuereinheit zumindest teilweise oder vollständig in ein oder mehrere dezentrale Steuergeräte integriert ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: ein erfindungsgemäßes Fahrzeug zum Ausführen eines erfindungsgemäßen Verfahrens,
- Figur 2: eine Bremseinheit des Fahrzeuges mit einem Stellmittel,
- Figur 3: ein Verlauf eines Betriebsparameters des Stellmittels beim Überführen des Stellmittels von einem Öffnungszustand in einen Haltezustand,
- Figur 4: ein Referenzverlauf des Betriebsparameters bei einem Nachstellvorgang bei dem Verfahren in Form eines Verlaufes, wenn keine Störung vorliegt,
- Figur 5 bis 7: unterschiedliche Verläufe des Betriebsparameters beim Nachstellvorgang, wenn eine Störung vorliegt, und
- Figur 8: das Verfahren in schematischer Darstellung von Verfahrensschritten.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

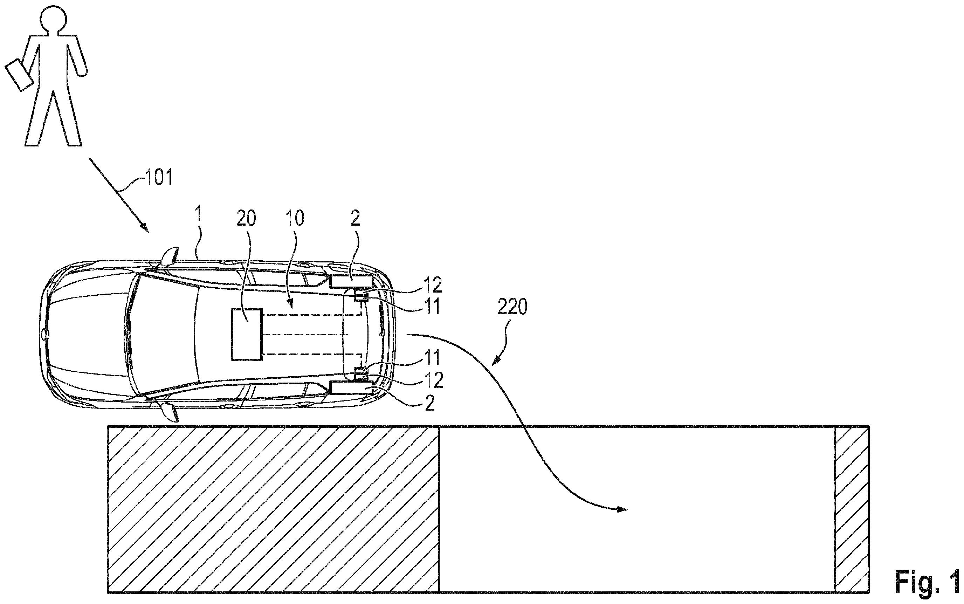

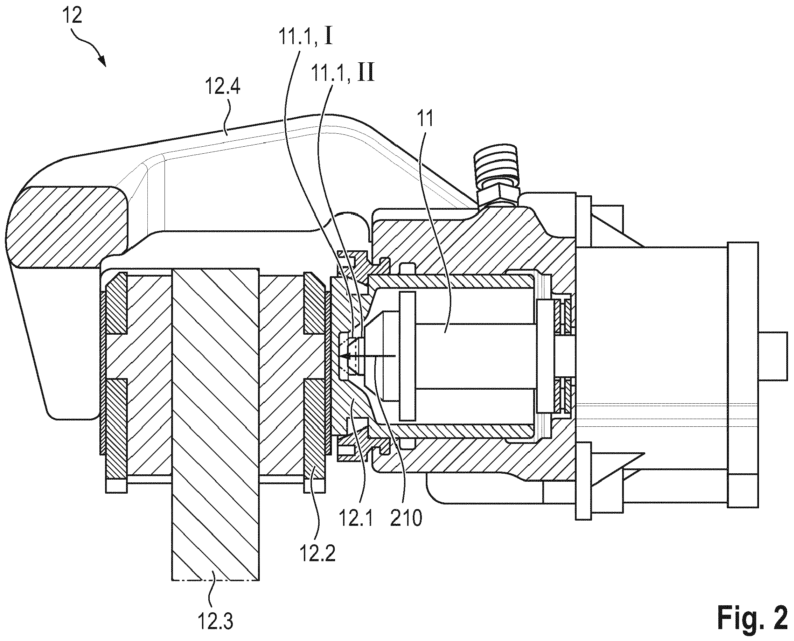

Figur 1 zeigt ein erfindungsgemäßes Fahrzeug 1 mit einem Bremssystem 10, welches an zumindest einem Fahrzeugrad 2 des Fahrzeuges 1 wirkt. Dabei weist das Bremssystem 10 ein Stellmittel 11 auf, das in einen Haltezustand I zum elektromechanischen Erzeugen einer Haltekraft 210 an einem Fahrzeugrad 2 des Fahrzeuges 1 und in einen Öffnungszustand II, in welchem die Haltekraft 210 gelöst ist, bringbar ist. Bei dem Stellmittel 11 handelt es sich um einen Stellantrieb zum elektromechanischen Erzeugen der Haltekraft 210. Wie in Figur 2 gezeigt, ist der Stellantrieb in einen Bremssattel 12.4 einer hydraulischen Bremseinheit 12 des Bremssystems 10 zum Aufbringen einer, insbesondere regulären, Bremskraft an dem Fahrzeugrad 2 integriert. Um die Haltekraft 210 am Fahrzeugrad 2 aufzubringen, wird ein Aktorelement 11.1 des Stellmittels 11 beim Überführen des Stellmittels 11 vom Öffnungszustand II in den Haltezustand I in Richtung eines Bremsbelages 12.2 der Bremseinheit 12 verstellt, wodurch der Bremsbelag 12.2 auf eine Bremsscheibe 12.3 der Bremseinheit 12 wirkt. Es ist jedoch ebenso denkbar, dass die Bremseinheit 12 als Trommelbremse ausgestaltet ist.

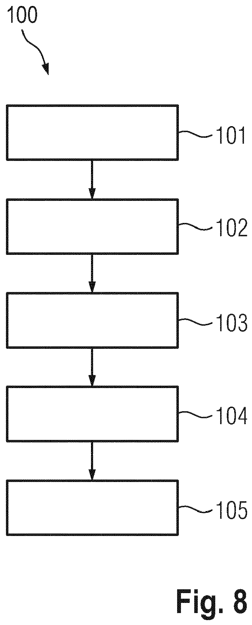

Weiterhin weist das Fahrzeug 1, vorzugsweise das Bremssystem 10, eine Steuereinheit 20 zum Ausführen eines erfindungsgemäßen Verfahrens 100 zum Betreiben des Bremssystems 10 auf. Das Verfahren 100 ist in schematischer Darstellung von Verfahrensschritten in Figur 8 gezeigt. Vorzugsweise ist ein Computerprogrammprodukt vorgesehen, das Befehle umfasst, die bei einer Ausführung durch die Steuereinheit 20 die Steuereinheit 20 veranlassen, das Verfahren 100 auszuführen.

Das Verfahren 100 kann beispielsweise dadurch initiiert werden, dass eine Anforderung 101 zum Überführen des Stellmittels 11 in den Öffnungszustand II erfolgt. Die Anforderung 101 kann beispielsweise bei einem automatisierten Ein- und/oder Ausparkvorgang 220 des Fahrzeuges 1 von einem mobilen Endgerät, wie z. B. einem Smartphone, durch die Steuereinheit 20 empfangen werden. Bei dem automatisierten Ein- und/oder Ausparkvorgang 220 kann sich der Fahrer außerhalb des Fahrzeuges 1 befinden. Es ist jedoch ebenso denkbar, dass die Anforderung 101 automatisiert, beispielsweise innerhalb der Steuereinheit 20, erfolgt, um eine Durchführung des Verfahrens 100 zu initiieren. Dies kann insbesondere dann vorteilhaft sein, wenn das Bremssystem 10 als Brake-by-Wire-System ausgebildet ist und der Fahrer im Fehlerfall keine manuelle Eingriffsmöglichkeit hat.

Weiterhin erfolgt bei dem Verfahren 100 ein Ansteuern des Stellmittels 11 zum Durchführen eines Nachstellvorgangs 102 zur Erhöhung der Haltekraft 210 im Haltezustand I des Stellmittels 11. Insbesondere wenn keine Störung 203 vorliegt, kann der Bremsbelag 12.2 bei dem Nachstellvorgang 102 durch das Aktorelement 11.1 des Stellmittels 11 weiter belastet werden, um die Haltekraft 210 zu erhöhen.

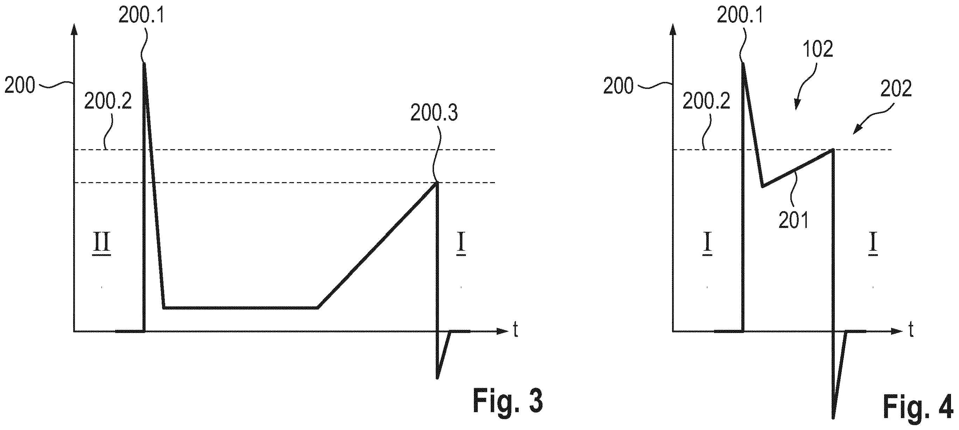

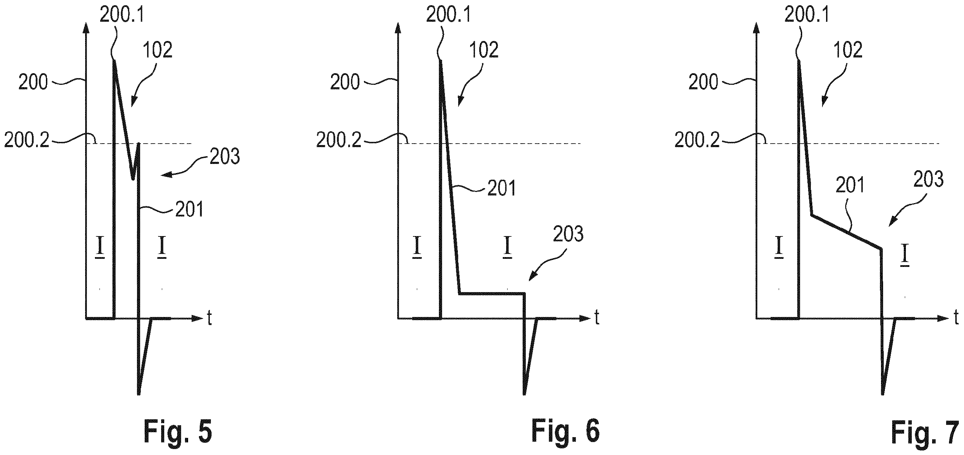

Zum Erkennen einer Störung 203 des Bremssystems 10, insbesondere des Stellmittels 11, erfolgt ein Erfassen 103 eines Betriebsparameters 200 des Stellmittels 11 bei dem Nachstellvorgang 102 und ein Auswerten 104 des Betriebsparameters 200 in Abhängigkeit von dem Nachstellvorgang 102 in Hinblick auf die Störung 203. Bei dem Betriebsparameter 200 handelt es sich im vorliegenden Ausführungsbeispiel um einen elektrischen Stromparameter in Form eines elektrischen Stroms zum Antrieb des Stellmittels 11. Anhand des Betriebsparameters 200 kann auf die Haltekraft 210 geschlossen werden. Alternativ ist es denkbar, dass der Betriebsparameter 200 in Form der Haltekraft 210 erfasst wird. Beim Auswerten 104 des Betriebsparameters 200 wird vorzugsweise überprüft, ob der Betriebsparameter 200 bei dem Nachstellvorgang 102 insbesondere nach einer vordefinierten Zeitspanne und/oder nach dem Überwinden eines Anlaufstroms 200.2 einen vordefinierten Schwellwert 200.1 erreicht. Dazu wird beim Auswerten 104 des Betriebsparameters 200 ein Verlauf 201 des Betriebsparameters 200 mit einem Referenzverlauf 202 für den Nachstellvorgang 102 verglichen. Verschiedene, mögliche Verläufe 201 des Betriebsparameters 200 beim Nachstellvorgang 102 sind in den Figuren 4 bis 7 über eine Zeit t gezeigt. Dabei wird anhand der Verläufe 201 des Betriebsparameters 200 gemäß der Figuren 5 bis 7 die Störung 203 erkannt. Beispielsweise wird der Schwellwert 200.1 gemäß Figur 5 nur unmittelbar nach dem Überwinden des Anlaufstroms 200.2 und gemäß der Figuren 6 und 7 nicht erreicht. Figur 4 stellt einen Verlauf 201 des Betriebsparameters 200 in Form des Referenzverlaufes 202 für den Nachstellvorgang 102 dar, bei dem die Störung 203 nicht vorliegt und sich das Bremssystem 10 mit dem Stellmittel 11 in einem funktionstüchtigen Normalzustand befindet. Zusätzlich kann vorgesehen sein, dass beim Auswerten 104 des Betriebsparameters 200 eine Lastprüfung der Steuereinheit 20 ausgeführt wird. Nach dem Durchführen des Nachstellvorgangs 102 kann das Überführen des Stellmittels 11 in den Öffnungszustand II ausgeführt werden. Dabei ist es denkbar, dass der Betriebsparameter 200 zusätzlich beim Überführen des Stellmittels 11 in den Öffnungszustand II erfasst und zum Erkennen der Störung 203 ausgewertet wird. Im Unterschied zu dem Nachstellvorgang 102 kann ein Überführen des Stellmittels 11 vom Öffnungszustand II in den Haltezustand I vollständig unterhalb des Schwellwertes 200.1 ablaufen, wie in Figur 3 gezeigt. Insbesondere kann der Schwellwert 200.2 größer als ein Abschaltstrom 200.3 beim Überführen des Stellmittels 11 vom Öffnungszustand II in den Haltezustand I definiert sein.

In Abhängigkeit von der Auswertung 104 des Betriebsparameters 200 erfolgt bei dem Verfahren 100 ferner ein Ausführen einer Reaktionsmaßnahme 105, beispielsweise indem eine Warnung an den Benutzer ausgegeben wird und/oder eine Fahrfunktion des Fahrzeuges 1 eingeschränkt wird. Insbesondere ist es denkbar, dass das Überführen des Stellmittels 11 in den Öffnungszustand II automatisch verhindert wird, wenn die Störung 203 anhand des Nachstellvorgangs 102 erkannt wird.

Um das Stellmittels 11 vor dem Nachstellvorgang 102 zu entlasten, kann die Bremskraft der hydraulischen Bremseinheit 12, an welcher das Stellmittel 11, wie in Figur 2 gezeigt, zum Ausüben der Haltekraft 210 wirkt, vor dem Durchführen des Nachstellvorgangs 102 zumindest teilweise am Fahrzeugrad 2 aufgebracht werden, während sich das Stellmittel 11 in dem Haltezustand I befindet. Dazu ist das Aktorelement 11.1 des Stellmittels 11 innerhalb eines Bremskolbens 12.1 der Bremseinheit 12 angeordnet und wirkt zum Aufbringen der Haltekraft 210 über den Bremskolben 12.1 und den Bremsbelag 12.2 auf die Bremsscheibe 12.3. Dadurch können die Bremskraft und die Haltekraft 210 überlagert werden. In diesem Fall kann der Schwellwert 200.1 und/oder die Haltekraft 210 bei Erreichen des Schwellwertes 200.1 durch den Betriebsparameter 200 zumindest im Wesentlichen der ursprünglichen Haltekraft 210 entsprechen. Dadurch kann eine wiederholte Überlast verhindert werden.

Wie in Figur 1 gezeigt, kann das Fahrzeug 1 mehrere Fahrzeugräder 2 aufweisen, an denen jeweils ein Stellmittel 11 wirkt. Die durch das Verfahren 100 ermöglichte Diagnose einer Störung 203, insbesondere das Ansteuern des jeweiligen Stellmittels 11, das Erfassen 103 des dem Stellmittel 11 zugeordneten Betriebsparameters 200 und das Auswerten 104 des jeweiligen Betriebsparameter 200, kann vorzugsweise gleichzeitig oder sequentiell nacheinander für jedes der Stellmittel 11 durchgeführt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug
- 2: Fahrzeugrad

- 10: Bremssystem
- 11: Stellmittel
- 11.1: Aktorelement
- 12: Bremseinheit
- 12.1: Bremskolben
- 12.2: Bremsbelag
- 12.3: Bremsscheibe
- 12.4: Bremssattel

- 20: Steuereinheit

- 100: Verfahren
- 101: Anforderung
- 102: Nachstellvorgang
- 103: Erfassen von 200
- 104: Auswerten von 200
- 105: Reaktionsmaßnahme

- 200: Betriebsparameter
- 200.1: Schwellwert
- 200.2: Anlaufstrom
- 200.3: regulärer Abschaltstrom
- 201: Verlauf
- 202: Referenzverlauf
- 203: Störung

- 210: Haltekraft
- 220: Ausparkvorgang

- I: Haltezustand
- II: Öffnungszustand
- t: Zeit

## Patentansprüche

1. Verfahren (100) zum Betreiben eines Bremssystems (10) eines Fahrzeuges (1), welches zumindest ein Stellmittel (11) aufweist, das in einen Haltezustand (I) zum Erzeugen einer Haltekraft (210) an einem Fahrzeugrad (2) des Fahrzeuges (1) und in einen Öffnungszustand (II), in welchem die Haltekraft (210) gelöst ist, bringbar ist,
wobei das Verfahren (100) umfasst:
- Ansteuern des Stellmittels (11) zum Durchführen eines Nachstellvorgangs (102) zur Erhöhung der Haltekraft (210) im Haltezustand (I) des Stellmittels (11),
- Erfassen (103) eines Betriebsparameters (200) des Stellmittels (11) bei dem Nachstellvorgang (102),
- Auswerten (104) des Betriebsparameters (200) zum Erkennen einer Störung (203) des Bremssystems (10) in Abhängigkeit von dem Nachstellvorgang (102),
- Ausführen einer Reaktionsmaßnahme (105) in Abhängigkeit von der Auswertung (104) des Betriebsparameters (200).

2. Verfahren (100) nach Anspruch 1,
**dadurch gekennzeichnet,**
**dass** es sich bei dem Stellmittel (11) um einen Stellantrieb zum elektromechanischen Erzeugen der Haltekraft (210) und/oder bei dem Betriebsparameter (200) um einen elektrischen Stromparameter des Stellmittels (11) handelt.

3. Verfahren (100) nach Anspruch 1 oder 2,
**dadurch gekennzeichnet,**
**dass** beim Auswerten (104) des Betriebsparameters (200) ein Verlauf (201) des Betriebsparameters (200) mit einem Referenzverlauf (202) für den Nachstellvorgang (102) verglichen wird.

4. Verfahren (100) nach einem der vorhergehenden Ansprüche,
**dadurch gekennzeichnet,**
**dass** das Durchführen des Nachstellvorgangs (102) in Abhängigkeit von einer Anforderung (101) zum Überführen des Stellmittels (11) in den Öffnungszustand (II) erfolgt.

5. Verfahren (100) nach einem der vorhergehenden Ansprüche,
**dadurch gekennzeichnet,**
**dass** das Überführen des Stellmittels (11) in den Öffnungszustand (II) nach dem Durchführen des Nachstellvorgangs (102) ausgeführt wird, wobei der Betriebsparameter (200) zusätzlich beim Überführen des Stellmittels (11) in den Öffnungszustand (II) erfasst und zum Erkennen der Störung (203) ausgewertet wird.

6. Verfahren (100) nach einem der vorhergehenden Ansprüche,
**dadurch gekennzeichnet,**
**dass** das Ansteuern des Stellmittels (11) zum Durchführen des Nachstellvorgangs (102) durch eine Steuereinheit (20) des Bremssystems (10) ausgeführt wird, wobei beim Auswerten (104) des Betriebsparameters (200) eine Lastprüfung der Steuereinheit (20) ausgeführt wird.

7. Verfahren (100) nach einem der vorhergehenden Ansprüche,
**dadurch gekennzeichnet,**
**dass** das Bremssystem (10) eine hydraulische Bremseinheit (12) zum Aufbringen einer Bremskraft an dem Fahrzeugrad (2) aufweist, an welcher das Stellmittel (11) zum Ausüben der Haltekraft (210) wirkt, wobei die Bremskraft durch die Bremseinheit (12) vor dem Durchführen des Nachstellvorgangs (102) zumindest teilweise am Fahrzeugrad (2) aufgebracht wird während sich das Stellmittel (11) in dem Haltezustand (I) befindet, um das Stellmittels (11) vor dem Nachstellvorgang (102) zu entlasten.

8. Verfahren (100) nach einem der vorhergehenden Ansprüche,
**dadurch gekennzeichnet,**
**dass** das Durchführen des Nachstellvorgangs (102) bei einem automatisierten Ein- und/oder Ausparkvorgang (220) des Fahrzeuges (1) erfolgt.

9. Computerprogrammprodukt, umfassend Befehle, die bei einer Ausführung durch eine Steuereinheit (20) die Steuereinheit (20) veranlassen, ein Verfahren (100) nach einem der vorhergehenden Ansprüche auszuführen.

10. Fahrzeug (1) aufweisend
ein erstes Fahrzeugrad (2),
ein Bremssystem (10) mit einem Stellmittel (11), das in einen Haltezustand (I) zum Erzeugen einer Haltekraft (210) an dem Fahrzeugrad (2) und in einen Öffnungszustand (II), in welchem die Haltekraft (210) gelöst ist, bringbar ist, und
eine Steuereinheit (20) zum Ausführen eines Verfahrens (100) nach einem der Ansprüche 1 bis 8.
